# EUROPÄISCHE PATENTSCHRIFT

(11) **EP 0 602 530 B1**
(45) Veröffentlichungstag und Bekanntmachung des Hinweises auf die Patenterteilung: **03.03.1999**
(21) Anmeldenummer: 93119796.6
(22) Anmeldetag: 08.12.1993
(51) Int. Cl.: H01J 9/32, H01J 61/36, H01J 5/26

(54) **Verfahren zur Herstellung einer vakuumdichten Abdichtung für ein keramisches Entladungsgefäss und Entladungslampe**
Method for producing a vacuum-tight seal for a ceramic discharge vessel and discharge lamp
Procédé pour fabriquer un joint étanche au vide pour un récipient céramique et une lampe à décharge

(30) Priorität: 14.12.1992 DE 4242122
(43) Veröffentlichungstag der Anmeldung: 22.06.1994
(73) Patentinhaber: Patent-Treuhand-Gesellschaft für elektrische Glühlampen mbH, 81543 München (DE)
(72) Erfinder: Heider, Jürgen, Dr., D-81547 München (DE); Jüngst, Stefan, Dr., D-85604 Zorneding (DE); Hüttinger, Roland, D-82287 Jesenwang (DE)

(56) Entgegenhaltungen:
- EP-A- 0 087 830
- EP-A- 0 136 505
- WO-A-93/07638
- FR-A- 2 173 092
- GB-A- 1 545 385
- PATENT ABSTRACTS OF JAPAN, unexamined applications, M section, vol. 3, no. 116, September 27, 1979 THE PATENT OFFICE JAPANESE GOVERNMENT page 74 M 74; & JP-A-54 090 873 (MITSUBISHI)

## Beschreibung

Die Erfindung betrifft ein Verfahren zur Herstellung einer vakuumdichten Abdichtung zwischen einem keramischen Entladungsgefäß für eine Lampe und einer metallischen elektrischen Durch führung, sowie eine Hochdruckentladungslampen.

Die Erfindung bezieht sich überwiegend, jedoch nicht ausschließlich, auf die Herstellung von keramischen Entladungsgefäßen für Hochdruckentladungslampen. Üblicherweise werden derartige Gefäße bei Natriumhochdrucklampen verwendet. In letzter Zeit wird jedoch auch versucht, die Vorteile dieser Gefäße für Metallhalogenid-Entladungslampen zu nutzen. Derartige Lampen besitzen üblicherweise ein Entladungsgefäß aus Quarzglas. Derzeit werden Anstrengungen unternommen, um bei diesen Lampen die Farbwiedergabe zu verbessern. Die dafür benötigte höhere Betriebstemperatur läßt sich mit einem keramischen Entladungsgefäß realisieren. Typische Leistungsstufen sind 50 - 250 W. Die Enden des länglichen Entladungsgefäßes sind üblicherweise mit zylindrischen keramischen Endstopfen verschlossen, in die mittig eine metallische Stromdurchführung eingesetzt ist. Von den Natriumhochdrucklampen her sind sowohl rohr- als auch stiftförmige Durchführungen aus Niob (GB-PS 1 465 212 und EP-PS 34 113) bekannt, die mittels Glaslot oder Schmelzkeramik in einem keramischen Endstopfen eingeschmolzen werden. Ferner ist auch eine direkte, glaslotfreie Einsintertechnik für Niobrohre beschrieben worden (EP-PS 136 505). Die Besonderheit von Natriumhochdruckentladungslampen besteht darin, daß die Füllung Natriumamalgam enthält, das häufig in einem Reservoir im Innern eines als Durchführung verwendeten Niobrohres enthalten ist.

Eine besonders einfache Möglichkeit des Füllens und Evakuierens des Entladungsgefäßes besteht darin, daß eines der beiden Niobrohre eine kleine Öffnung in der Nähe des am Rohr angesetzten Elektrodenschafts im Innern des Entladungsgefäßes besitzt, so daß durch diese Öffnung ein Evakuieren und Füllen des Amalgams und des Inertgases möglich ist (GB-PS 2 072 939). Nach Abschluß des Füllvorgangs wird das außen überstehende Ende des Niobrohres durch eine Quetschung mit anschließender Verschweißung gasdicht verschlossen. Dabei bleibt jedoch immer die Öffnung in der Nähe des Elektrodenschafts durchgängig, um während des Betriebs eine Verbindung zwischen dem Innenraum des Entladungsgefäßes und dem als Cold Spot wirkenden Innern des Durchführungsrohrs sicherzustellen.

Eine andere Verschlußtechnik für Natriumhochdrucklampen ist aus der DE-PS 25 48 732 bekannt. Sie verwendet rohrförmige Durchführungen aus Wolfram, Molybdän oder Rnenium, die in den Stopfen unter Zuhilfenahme eines keramischen zylindrischen Formteils im Innern des Rohrs mittels Schmelzkeramik gasdicht eingeschmolzen werden. Auf das Quetschen des äußeren Rohrendes nach Abschluß des Füllvorgangs muß hier verzichtet werden, weil bekanntlich diese Metalle im Gegensatz zu Niob sehr spröde sind und daher nur schwer bearbeitet werden können. Die Verschlußtechniken, die für Niobrohre bekannt sind, können daher nicht ohne weiteres übernommen werden. Statt dessen ist das keramische Formteil mit einer axialen Bohrung ausgestattet, die beim Evakuieren und Füllen mit einer Öffnung im Rohr in der Nähe des Elektrodenschafts zusammenwirkt. Nach dem Füllen wird die axiale Bohrung des Formteils mit Schmelzkeramik verschlossen, so daß ein Bearbeiten des spröden molybdänähnlichen Metalls entfällt. Diese Technik ist jedoch sehr umständlich und daher kostenträchtig und zeitaufwendig.

Schließlich ist in der EP-PA 92 114 227.9 (A. 54 (3) EPÜ) eine Hochdrucklampe mit keramischem Entladungsgefäß beschrieben, bei der eine rohrartige Durchfünrung aus Molybdän o.ä. direkt in einen keramischen Endstopfen eingesintert ist. Weiterhin ist in der PCT/DE 92/00 372 (A. 54 (3) EPÜ) ein Füllverfahren für Metallhalogenid-Entladungslampen mit keramischem Entladungsgefäß beschrieben, bei der eine öffnung in der Durchfünrung oder im Endstopfen oder im Entladungsgefäß als Füllbohrung verwendet wird. Die vorliegende Anmeldung nimmt ausdrücklich Bezug auf den Inhalt dieser beiden alteren Rechte.

Der Nachteil dieses vorbekannten Füllverfahrens ist, daß entweder eine zusätzliche Öffnung im Entladungsgefäß oder Endstopfen bereitgestellt und verschlossen werden muß oder daß - im Fall der Verwendung einer Öffnung in der Durchführung - die an der Durchführung befestigte Elektrode die Weite der Füllbohrung einengt und den Füllvorgang behindert. Überdies kann diese Füllbohrung bei einigen Ausführungsformen nachträglich nur mit großer Mühe wieder verschlossen werden.

Als hinderlich für eine Anwendung bei Natriumhochdrucklampen hat sich außerdem erwiesen, daß die Elektroden bei der Direkteinsinterung der Durchführung zwangsläufig dem Sinterprozeß mit seinen hohen Temperaturen von mehr als 1800 °C ausgesetzt wären. Bei diesen Temperaturen würde der Großteil eines etwaigen an der Elektrode aufgebrachten Emitters verdampfen, der häufig bei Natriumhochdrucklampen verwendet wird.

Als nachteilig im Herstellungsablauf der Serienfertigung hat sich außerdem erwiesen, daß die Elektrodensysteme bereits zum Zeitpunkt der Einsinterung des Endstopfens zur Verfügung stehen müssen. Insbesondere wenn die Herstellung in einzelnen Zwischenschritten an verschiedenen Orten erfolgt, ist die Gefahr von Transportschäden an den Elektroden groß. Außerdem ist die Flexibilität hinsichtlich der Möglichkeit des Einbaus unterschiedlicher Elektrodensysteme stark eingeschränkt.

Es ist Aufgabe der vorliegenden Erfindung, eine dauerhafte Verbindung zwischen einem keramischen Entladungsgefäß für eine Lampe und einer metallischen elektrischen Durchführung herzustellen. Eine weitere Aufgabe besteht darin, eine besonders sichere Verbindungstechnik anzugeben, die auch den extremen Belastungen von keramischen Entladungsgefäßen mit aggressiver Füllung standhält. Eine weitere Aufgabe ist es, das Evakuieren und Füllen von keramischen Entladungsgefäßen zu erleichtern. Eine zusätzliche Aufgabe besteht darin, eine Hochdrucklampe mit langer Lebensdauer zu schaffen.

Diese Aufgaben werden durch ein Verfahren und eine Vorrichtung gemäß Anspruch 1 bzw. Anspruch 5 gelöst.

Besonders vorteilhafte Ausgestaltungen finden sich in den davon abhängigen Unteransprüchen.

Das erfindungsgemäße Verfahren vermeidet die oben diskutierten Nachteile des Stands der Technik. Das Abdichten des keramischen Behältnisses erfolgt in mehreren Teilschritten unter Zuhilfenahme eines zusätzlichen Teils, des offenen Rohres. Es besteht aus Molybdän oder dessen Legierung (niedriger Ausdehnungskoeffizient bei guter Korrosionsbeständigkeit) oder Wolfram oder Rhenium (doch ist hier die praktische Realisierung aufwendiger). Im folgenden wird daher immer von einem Molybdänrohr gesprochen, ohne jedoch die Erfindung ausschließlich darauf zu beschränken.

Das Molybdänrohr wird in einem ersten Schritt in eine Öffnung des keramischen Behältnisses direkt eingesintert. Als Abdichtmittel ist dabei ein entsprechend geformtes integrales Ende des Behältnisses geeignet. Häufig wird jedoch ein separates Abdichtmittel in Form eines Endstopfens, wie er aus dem eingangs erwähnten Stand der Technik bekannt ist, verwendet. Für den Lampenbau besteht der Endstopfen üblicherweise ähnlich wie das keramische Behältnis aus einer transluzenten Keramik, vornehmlich Al₂O₃ unter etwaiger Verwendung von Dotierungsstoffen. In diesem Fall liegen der Ausdehnungskoeffizient des keramischen Behältnisses (6,5 bis 9 x 10⁻⁶ K⁻¹) und des Endstopfens eng beisammen. Für den Endstopfen kann aber auch ein - evtl. mehrere Komponenten enthaltendes - Material verwendet werden, das überwiegend aus Keramik besteht, jedoch bis zu 40 % Zusatzstoffe enthält, die den Ausdehnungskoeffizienten reduzieren, so daß er zwischen dem des keramischen und metallischen Partners liegt. Beispiele hierfür finden sich in der PCT/DE 92/00372.

Die Einzelheiten der Technik der Direkteinsinterung sind in der EP-PA 92 114 227.9 ausführlich beschrieben. Sie hat den grundsätzlichen Vorteil, daß auf die Verwendung eines - normalerweise nicht korrosionsbeständigen - Glaslots bzw. Schmelzkeramik im hochbelasteten Bereich der Durchführung verzichtet werden kann.

In einem zweiten Schritt wird eine Durchführung, wie sie bei Entladungslampen und -röhren verwendet wird, in das eingesinterte offene Molybdänrohr eingeführt. Er ist häufig. Dieser metallische Partner ist in seinen äußeren Abmessungen dem Molybdänrohr angepaßt, d.h. er Kann entweder ein Rohr oder Stift sein, der evtl. auch aus mehreren Teilen zusammengesetzt ist. Er besteht aus einem Material, dessen thermischer Ausdehnungskoeffizient deutlich (bis zu 60 %, u.U. sogar mehr) kleiner als der des Behältnisses sein kann. Das Material sollte vorteilhaft korrosionsbeständig gegen Metallhalogenide und Natrium sein. Hierfür kommen hauptsächlich Molybdän, Wolfram und Rhenium in Betracht, deren thermische Ausdehnungskoeffizienten bei etwa 4 bis 5 x 10⁻⁶ K⁻¹ liegen.

Es ist wichtig, daß der Koeffizient der Durchführung in etwa dem des Molybdänrohrs entspricht, da in einem dritten Schritt die Abdichtung der Öffnung dadurch vollendet wird, daß die Durchführung mit dem Molybdänrohr im Bereich des äußeren (bei einer Durchführung für Entladungslampen und -röhren also des entladungsfernen) Endes des Molybdänrohrs verbunden, insbesondere verschweißt wird. Der Vorteil ist, daß das äußere Ende leicht zugänglich ist und die Qualität der Verbindung zuverlässig überwacht werden kann. Würden Materialien mit stark unterschiedlichen Ausdehnungskoeffizienten miteinander verbunden, wäre die Nahtstelle einer hohen mechanischen Belastung bei thermischer Beanspruchung ausgesetzt, die zum vorzeitigen Lecken der Abdichtung führen würde.

Die Durchführung sollte bereits Teil eines vormontierten Elektrodensystems sein, wobei darauf zu achten ist, daß der Durchmesser der Elektrode kleiner als der Innendurchmesser des Molybdänrohrs sein muß. Das Elektrodensystem muß für sich genommen vakuumdicht abgeschlossen sein, um sicherzustellen, daß der dritte Verfahrensschritt die Abdichtung vollendet. Hierzu gibt es im Prinzip zwei Möglichkeiten. Die hinsichtlich der Abdichtung sicherste Möglichkeit ist die Verwendung eines massiven Stiftes als Durchführung, wobei die Elektrode in beliebiger Weise am entladungsseitigen Ende des Stiftes befestigt ist. Allerdings ist hier der Materialverbrauch relativ hoch. Eine Alternative besteht darin, ein Rohr zu verwenden, das - für Metallhalogenidlampen vorteilhaft an seinem entladungsseitigen Ende - vakuumdicht, z.B. durch den Elektrodenschaft, abgeschlossen ist. Als Kompromiß, der auch für Natriumhochdrucklampen gut geeignet ist, bietet sich eine aus einem Rohr- und einem Stiftabschnitt zusammengesetzte Durchführung an. Es kommt aber auch ein Rohr mit eingesetztem Stift in Betracht; dieser kann vorteilhaft gleich als außen überstehende Kontaktierhilfe für die äußere Stromzuführung verwendet werden.

Das erfindungsgemäße Verfahren bietet zudem eine einfache Möglichkeit, das keramische Behältnis durch das noch offene Molybdänrohr mit Füllmaterial zu beschicken. Üblicherweise handelt es sich dabei um Inertgase, insbesondere Edelgase (Xenon, Argon) und/oder Quecksilber, die zum Einleiten bzw. Aufrechterhalten einer Entladung zwischen zwei im keramischen Behältnis eingebrachten Elektroden benötigt werden. Außerdem lassen sich Zusatzstoffe wie Natrium (amalgamiert mit Quecksilber) oder Metallhalogenide (meist in fester Form) durch die natürliche Öffnung des Molybdänrohrs einfach und zuverlässig einbringen.

Wegen der Flüchtigkeit der Füllsubstanzen ist es von besonderem Vorteil, daß dann das endgültige Verschließen in der Nähe des äußeren Endes des Molybdänrohrs stattfinden kann. Diese Substanzen müssen normalerweise während des Verschließens gekühlt werden, um ihr Entweichen durch die offene Füllbohrung zu verhindern. Da jedoch die für das Verschließen notwendige Energiezufuhr lokal, extrem kurzzeitig (verglichen mit einer Einschmelzung) und weit entfernt von der Füllsubstanz vorgenommen werden kann, ist die Gefahr einer Erwärmung der Füllsubstanzen nicht mehr gegeben, so daß das Kühlen entfallen kann.

Diese Verschlußtechnik stellt damit auch erst die Voraussetzungen her, um keramische Entladungsgefäße für extrem quecksilberarme Lampen, ja sogar quecksilberfreie Lampen, nutzbar zu machen, bei denen die Brennspannung durch einen stark überhöhten Edelgasdruck (Xenon) aufrechterhalten wird.

Besonders bewährt haben sich Molybdänrohre mit einem Außendurchmesser von ca. 1,3 bis 2,0 mm und einem Innendurchmesser von ca. 0,8 bis 1,5 mm entsprechend einer Wandstärke von 0,1 bis 0,3 mm. Diese Abmessungen sichern die notwendige Flexibilität für eine dauerhafte Direkteinsinterung und eine genügend große Einfüllöffnung für die Füllsubstanzen. Der besondere Vorteil einer derartigen Lampe ist, daß auf jegliche Art von Lot (Glas oder Metall) bzw. Schmelzkeramik verzichtet werden kann.

Die Erfindung wird im folgenden anhand mehrerer Ausfünrungsbeispiele erläutert. Es zeigt
- Figur 1: das Abdichten eines Entladungsgefäßendes mit Hilfe des erfindungsgemäßen Verfahrens in mehreren Schritten (Fig. 1a und 1b)
- Figur 2: bis 5 weitere Ausführungsformen des Elektrodensystems
- Figur 6: ein Ausführungsbeispiel einer Lampe

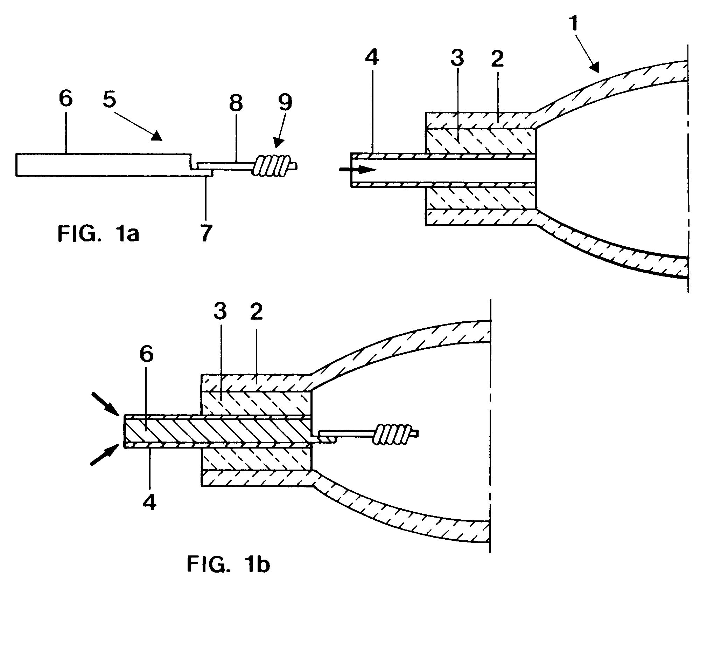

Figur 1 zeigt ein Entladungsgefäß 1 (in Teilansicht) für eine Metallhalogenid-Entladungslampe. Es besteht aus Al₂O₃-Keramik. Das Ende 2 ist mit einem Endstopfen 3 aus einer Übergangskeramik (60 % Al₂O₃ und 40 % Wolfram) verschlossen, in den ein Molybdänrohr 4 direkt eingesintert ist. Das bauchige Entladungsgefäß 1 besitzt einen Außendurchmesser von etwa 5,75 mm im Bereich der zylindrischen Enden 2. Der Außendurchmesser des in das Ende 2 direkt eingesinterten (oder auch eingeschmolzenen) Endstopfens 3 beträgt 3,25 mm. In ihm ist seinerseits das Molybdänrohr 4 mit einem Außendurchmesser von 1,65 mm eingepaßt. Es schließt entladungsseitig mit dem Endstopfen 3 ab, steht aber an der entladungsfernen Seite des Endstopfens über.

Durch das offene Molybdänrohr 4 wird das Innere des Entladungsgefäßes 1 (unter der Voraussetzung, daß das zweite, nicht sichtbare Ende bereits vakuumdicht verschlossen ist) evakuiert. Anschließend wird inertes Zündgas (Argon bzw. Xenon) in das Entladungsgefäß 1 eingefüllt. Des weiteren werden geeignet portioniertes Quecksilber und Metallhalogenide (letzteres in Form von Pillen) sowie evt1. zusätzlich Metalle (in Form von Drahtstiften) durch das Rohr 4 eingefüllt. Das Entladungsgefäß wird am bereits vorher verschlossenen Ende (nicht sichtbar) mit flüssigem Stickstoff gekühlt, wobei das offene Ende 2 nach oben ausgerichtet ist.

In das Molybdänrohr 4 mit einem Innendurchmesser von 1,3 mm wird nun unverzüglich ein vormontiertes Elektrodensystem 5 eingeführt (Fig. 1a). Es besteht aus einem Molybdän- (oder auch Wolframstift) 6 mit einem Durchmesser von ca. 1,2 mm, dessen entladungsseitiges Ende einen Vorsprung 7 besitzt, an den ein Elektrodenkernstift 8 mit einem Durchmesser von 0,5 mm angeschweißt ist. Der Kernstift 8 besteht aus Wolfram. Auf ihm ist eine Wendel 9 befestigt, deren Außendurchmesser den des Molybdänstifts 6 nicht übersteigt.

Vorteilhaft besitzt der Molybdänstift 6 an dem dem Vorsprung 7 gegenüberliegenden Ende einen über den Innendurchmesser des Molybdänrohrs 4 überstehenden Anschlag (nicht sichtbar), z.B. in Form dreier Nasen, die über den Umfang des Stiftes 6 gleichmäßig verteilt sind. Der Anschlag sichert die Einhaltung des Elektrodenabstands und ermöglicht die provisorische Halterung des Stiftes.

Das endgültige Verschließen des Endes 2 erfolgt, indem am äußeren Ende von Rohr 4 und Stift 6 der zwischen beiden Teilen bestehende Ringspalt mittels einer Laserschweißung (Pfeile) abgedichtet wird (Fig. 1b). Der Ringspalt wird dabei mit einem Nd/YAG-Laser (λ = 1,06 µm) abgefahren (evtl. mehrmals). Während des Abfahrens werden Laserpulse gesetzt, wodurch eine vollständige Verschweißung erzielt wird. Das restliche Elektrodensystem und insbesondere das Entladungsgefäß werden durch diese schonende Wärmebehandlung nicht nennenswert erwärmt. Daher ist die erfindungsgemäße Art der Abdichtung insbesondere auch bei sehr kleinen Gefäßabmessungen (z.B. entsprechend einer Leistungsstufe von 50 W oder kleiner) und/oder für Füllsysteme mit hohem Füllgasdruck (z.B. Xenon statt Argon) anwendbar.

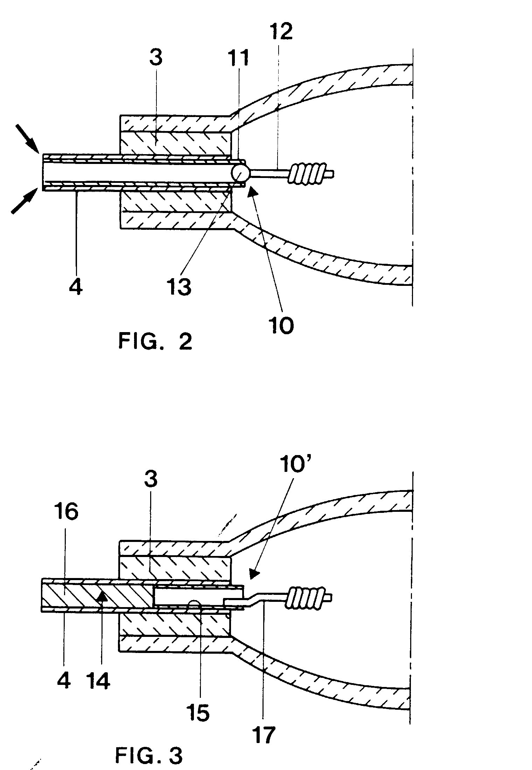

Ein alternativ verwendbares Elektrodensystem 10 ist in Fig. 2 gezeigt. Es besteht aus einem Molybdänrohr 11 als Durchführung, das bei einem Außendurchmesser von 1,2 mm einen Innendurchmesser von 1,0 mm aufweist. Das Rohr 11 steht entladungsseitig am äußeren Molybdänrohr 4 etwas über. An diesem Ende ist ein Kernstift 12 befestigt, dessen Durchmesser (0,5 mm) erheblich kleiner als der des Innendurchmessers des Molybdänrohrs 11 ist. Zu diesem Zweck wird das Ende des Kernstifts 12 so weit zurückgeschmolzen, daß es eine Kugel 13 mit einem Durchmesser bildet, der dem Innendurchmesser des Molybdänrohrs 11 angepaßt ist. Bei dieser Ausführungsform erfolgt die Abdichtung des Elektrodensystems 10 dadurch, daß das Kugelende 13 mit dem Molybdänrohr 11 verschweißt ist. Die Befestigung der Durchführung 11 am äußeren Molybdänrohr 4 erfolgt wieder ähnlich wie im ersten Ausführungsbeispiel durch Laserschweißen (Pfeil) am äußeren Ende.

Bei einem dritten Ausführungsbeispiel, das sich besonders gut für Natriumhochdrucklampen eignet, ist die Durchführung 14 aus zwei Abschnitten 15, 16 aus Molybdän zusammengesetzt. Der entladungsseitige Abschnitt 15 ist ein Rohr, in dem ein Kernstift 17 an der Innenwand befestigt ist. Der entladungsferne Abschnitt 16 ist ein Stift, der stumpf mit dem Rohrabschnitt 15 verschweißt ist. Der Kernstift 17 ist etwas außerhalb der Lampenachse angeordnet, um eine öffnung zu belassen, die den als Amalgamreservoir wirkenden Rohrabschnitt 15 mit dem Innenraum des Entladungsgefäßes verbindet. Der vordere Teil des Kernstifts 17 ist dabei vorteilhaft zur Achse hin abgewinkelt, um das Einsetzen des Elektrodensystems 10' in das Molybdänrohr 4 zu erleichtern und das entladungsseitige Ende der Elektrode exakt in der Achse auszurichten.

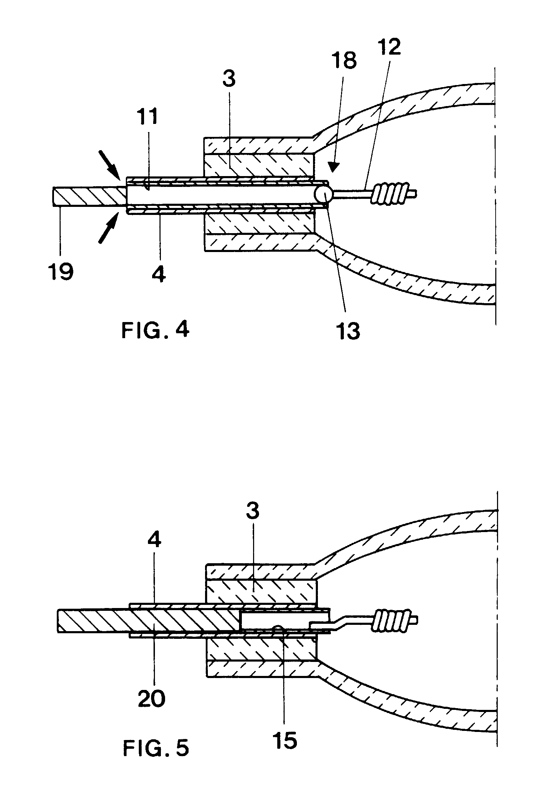

Eine weitere Ausführungsform des Elektrodensystems 18 zeigt Fig. 4. Dabei ist an die rohrartige Durchführung 11 (entsprechend Fig. 2) noch eine Kontaktierhilfe 19 in Form eines Molybdänstiftes angesetzt, um die Befestigung einer äußeren Stromzuführung zu erleichtern. Vorteilhaft kann diese Kontaktierhilfe 19 beim Abdichten (Pfeil) von Durchführung 11 und äußerem Molybdänrohr 4 mit eingeschweißt werden. Dadurch erhält das Elektrodensystem 18 eine zusätzliche Abdichtung, die die Lebensdauer weiter verlängert. Die erste Abdichtung erfolgt wie schon anhand von Fig. 2 gezeigt, durch das Befestigen des kugeligen Endes 13 des Kernstifts 12 in der rohrartigen Durchführung 11.

Die äußere Kontaktierhilfe kann bei einer Ausführungsform ähnlich Fig. 3 auch dadurch realisiert werden, daß der Stiftabschnitt 20 bis über das Ende des Molybdänrohrs 4 hinaus verlängert ist (Fig. 5).

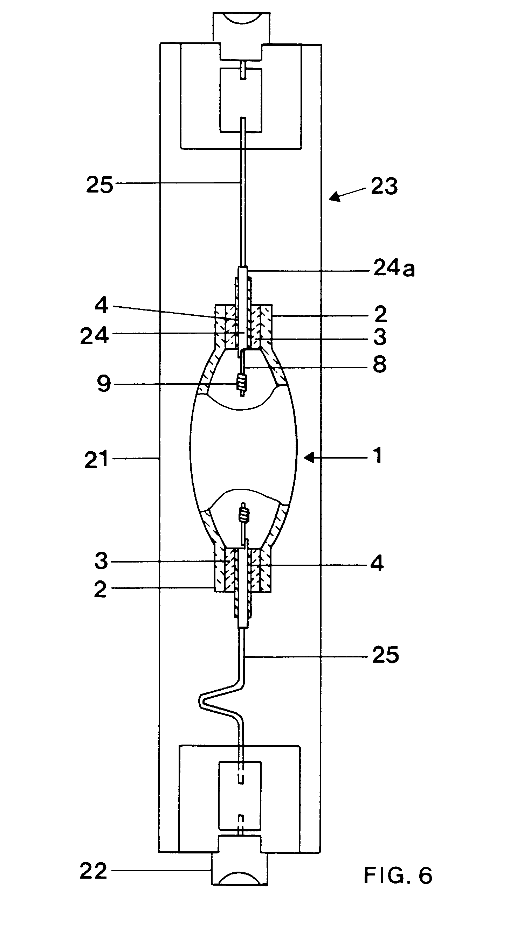

Die Erfindung ist nicht durch die gezeigten Ausführungsbeispiele begrenzt. Beispielsweise kann das Ende 24a einer durchgehenden stiftförmigen Durchführung 24 als Kontaktierhilfe für die äußeren Stromzuführungen 25 über das Ende des Molybdänrohrs 4 hinaus verlängert sein (Fig. 6). Die hier beschriebenen Entladungsgefäße werden üblicherweise in einem Außenkolben 21 aus Hartglas eingesetzt (Fig. 6). Er besitzt die Form eines Zylinders. Seine beiden Enden sind mit keramischen Sockeln 22 verschlossen. Eine derartig aufgebaute Lampe 23 mit Metallhalogenidfüllung zeichnet sich insbesondere durch ihre gute Farbwiedergabe (Ra > 90) aus.

## Patentansprüche

1. Verfahren zur Herstellung einer vakuumdichten Abdichtung zwischen einem keramischen Entladungsgefäß für eine Lampe und einer metallischen elektrischen Durchführung,
wobei das keramische Entladungsgefäß eine Öffnung besitzt, und
wobei die elektrische Durchführung Teil eines vorgefertigten Elektrodensystems (5;10;10';18) ist, das zumindest noch eine Elektrode umfaßt, die an der Durchführung (6;11;14;24) so befestigt ist, daß das Elektrodensystem für sich genommen vakuumdicht ist,
wobei das keramische Material des Entladungsgefäßes einen thermischen Ausdehnungskoeffizienten zwischen 6,5 und 9x10⁻⁶ K⁻¹ besitzt,
und wobei das Metall der Durchführung einen thermischen Ausdehnungskoeffizienten besitzt, der kleiner als der des Entladungsgefäßes ist,
bestehend aus folgenden Verfahrensschritten in der genannten Reihenfolge:
a 1) direktes Einsintern eines offenen metallischen Rohrs (4) aus Molybdän oder dessen Legierungen, oder Wolfram oder Rhenium in die Öffnung des Entladungsgefäßes (1) unter Mitwirkung eines Abdichtmittels (3), wobei das Metall des Rohrs ebenfalls einen thermischen Ausdehnungskoeffizienten besitzt, der kleiner als der des Entladungsgefäßes ist;
a 2) Evakuieren und Beschicken des keramischen Entladungsgefäßes (1) mit Füllmaterial über das offene Rohr (4);
b) Einführen des Elektrodensystems einschließlich der Durchführung in das offene Rohr (4) wobei die außeren Abmessungen der Durchführung an das Rohr angepaßt sind ;
c) vakuumdichtes direktes Verbinden des zwischen der Durchführung und dem Rohr (4) verbleibenden Spaltes im Bereich des äußeren Endes des Rohrs (4).

2. Verfahren nach Anspruch 1, dadurch gekennzeichnet, daß das Rohr aus Molybdän oder dessen Legierung und die Durchführung aus Molybdän, Wolfram, Rhenium oder deren Legierungen besteht.

3. Verfahren nach Anspruch 1, dadurch gekennzeichnet, daß das Abdichtmittel ein Endstopfen (3) ist, der aus keramikartigem Material besteht, dessen Ausdehnungskoeffizient dem des keramischen Entladungsgefäßes nahekommt oder zwischen dem des Entladungsgefäßes und der Durchführung liegt.

4. Verfahren nach Anspruch 1, dadurch gekennzeichnet, daß in Schritt c) das vakuumdichte Verschließen durch einen Schweißvorgang erfolgt.

5. Hochdruckentladungslampe (23) mit einem Entladungsgefäß (1) aus durchscheinender Keramik, das eine lichterzeugende Füllung umschließt, wobei das Entladungsgefäß (1) zwei Enden (2) besitzt, die mit Mitteln zum Abdichten (3) verschlossen sind und wobei durch eines dieser Mittel eine elektrisch-leitende Durchführung (24) vakuumdicht hindurchgeführt ist, die eine Elektrode (8, 9) im Innern des Entladungsgefäßes mit einer äußeren elektrischen Zuleitung (25) verbindet, dadurch gekennzeichnet, daß zumindest an einem Ende (2) die Durchführung (24) im Bereich des Abdichtmittels (3) von einem Rohr (4) aus Molybdän oder dessen Legierungen, oder Wolfram oder Rhenium so umgeben ist, daß die äußeren Abmessungen der Durchführung dem Rohr (4) angepaßt sind, wobei das Rohr (4) mit der Durchführung (24) vakuumdicht direkt verbunden ist, wobei das Rohr (4) in das Mittel zum Abdichten vakuumdicht direkt eingesintert ist.

6. Lampe oder Entladungsgefäß nach Anspruch 5, dadurch gekennzeichnet, daß das Mittel zum Abdichten ein Endstopfen (3) aus keramikartigem Material ist, dessen Ausdehnungskoeffizient zwischen dem des keramischen Entladungsgefäßes und dem der Durchführung liegt.

7. Lampe oder Entladungsgefäß nach Anspruch 6, dadurch gekennzeichnet, daß der Endstopfen aus keramischem Mehrkomponenten-Material besteht, das Al₂O₃ als Hauptbestandteil enthält sowie eine oder mehrere Zusatzkomponenten, deren Ausdehnungskoeffizient kleiner als der von Al₂O₃ ist, wobei das Entladungsgefäß aus Al₂O₃ besteht.

8. Lampe oder Entladungsgefäß nach Anspruch 5, dadurch gekennzeichnet, daß die Durchführung ein Rohr (11) oder ein Stift (6; 24) oder ein daraus zusammengesetztes Teil (14,15) ist.

9. Lampe oder Entladungsgefäß nach Anspruch 5, dadurch gekennzeichnet, daß am entladungsfernen Ende der Durchführung eine Kontaktierhilfe (19; 24a) für eine äußere elektrische Zuleitung (25) angebracht ist.

10. Lampe oder Entladungsgefäß nach Anspruch 5, dadurch gekennzeichnet, daß das Rohr (4) einen Außendurchmesser von ca. 1,3 bis 2,0 mm und einen Innendurchmesser von 0,5 bis 1,5 mm besitzt.

11. Lampe oder Entladungsgefäß nach Anspruch 5, dadurch gekennzeichnet, daß das Elektrodensystem (5;10;10';18), zumindest bestehend aus Durchführung und Elektrode, für sich genommen vakuumdicht ist.

## Claims

1. Method for producing a vacuum-tight seal between a ceramic discharge vessel for a lamp and a metal electric lead-through, the ceramic discharge vessel having an opening, and the electric lead-through being part of a prefabricated electrode system (5;10;10';18) which comprises at least one further electrode which is fastened to the lead-through (6;11;14;24) such that the electrode system is vacuum-tight in itself, the ceramic material of the discharge vessel having a coefficient of thermal expansion between 6.5 and 9 x 10⁻⁶K⁻¹, and the metal of the lead-through having a coefficient of thermal expansion which is smaller than that of the discharge vessel, comprising the following method steps in the said sequence:
a1) direct sintering of an open metal tube (4) made from molybdenum or alloys thereof, or tungsten or rhenium, into the opening of the discharge vessel (1) assisted by a sealing means (3), the metal of the tube likewise having a coefficient of thermal expansion which is smaller than that of the discharge vessel;
a2) evacuating and charging the ceramic discharge vessel (1) with filling material via the open tube (4);
b) inserting the electrode system including the lead-through into the open tube (4), the outer dimensions of the lead-through being adapted to the tube; and
c) directly connecting the gap remaining between the lead-through and the tube (4) in a vacuum-tight fashion in the region of the outer end of the tube (4).

2. Method according to Claim 1, characterized in that the tube consists of molybdenum or alloys lead-through thereof, and the lead-through consists of molybdenum, tungsten, rhenium or alloys thereof.

3. Method according to Claim 1, characterized in that the sealing means is an end stopper (3) which comprises ceramic-like material whose coefficient of expansion approximates that of the ceramic discharge vessel or is between that of the discharge vessel and the lead-through.

4. Method according to Claim 1, characterized in that the vacuum-tight sealing is performed in step c) by a welding operation.

5. High-pressure discharge lamp (23) having a discharge vessel (1), made from translucent ceramic, which surrounds a light-producing filling, the discharge vessel (1) having two ends (2) which are sealed by means for sealing (3) and there being guided in a vacuum-tight fashion through one of said means an electrically conducting lead-through (24) which connects an electrode (8, 9) in the interior of the discharge vessel to an external electric lead (25), characterized in that at least at one end (2) the lead-through (24) is surrounded in the region of the sealing means (3) by a tube (4), made from molybdenum or alloys thereof, or tungsten or rhenium, such that the outer dimensions of the lead-through are adapted to the tube (4), the tube (4) being connected directly to the lead-through (24) in a vacuum-tight fashion, the tube (4) being directly sintered in a vacuum-tight fashion into the means for sealing.

6. Lamp or discharge vessel according to Claim 5, characterized in that the means for sealing is an end stopper (3) made from ceramic-like material whose coefficient of expansion is between that of the ceramic discharge vessel and that of the lead-through.

7. Lamp or discharge vessel according to Claim 6, characterized in that the end stopper consists of ceramic multi-component material which contains Al₂O₃ as main component as well as one or more additional components whose coefficient of expansion is smaller than that of Al₂O₃, the discharge vessel consisting of Al₂O₃.

8. Lamp or discharge vessel according to Claim 5, characterized in that the lead-through is a tube (11) of a pin (6; 24) or a part (14, 15) assembled therefrom.

9. Lamp or discharge vessel according to Claim 5, characterized in that the contacting aid (19; 24a) for an external electric feed (25) is attached to the end of the lead-through remote from the discharge.

10. Lamp or discharge vessel according to Claim 5, characterized in that the tube (4) has an outside diameter of approximately 1.3 to 2.0 mm and an inside diameter of 0.5 to 1.5 mm.

11. Lamp or discharge vessel according to Claim 5, characterized in that the electrode system (5;10;10';18), at least comprising the lead-through and electrode, is vacuum-tight in itself.

## Revendications

1. Procédé de fabrication d'un joint étanche au vide entre une enceinte de décharge en céramique destinée à une lampe et une traversée électrique métallique,
l'enceinte de décharge en céramique comportant une ouverture, et
la traversée électrique faisant partie d'un système (5;10;10';18) d'électrode préfabriqué, qui comprend au moins encore une électrode qui est fixée à la traversée (6;11;14;24) de telle manière que le système d'électrode pris en soi est étanche au vide,
le matériau céramique de l'enceinte de décharge ayant un coefficient de dilatation thermique compris entre 6,5 et 9x10⁻⁶ K⁻¹,
et le métal de la traversée ayant un coefficient de dilatation thermique qui est inférieure à celui de l'enceinte de décharge,
consistant en les étapes opératoires suivantes,
en la succession indiquée :
a1) on fritte directement un tube (4) métallique ouvert en molybdène ou en l'un de ces alliages, ou en tungstène ou en rhénium, dans l'ouverture de l'enceinte (1) de décharge, avec coopération d'un moyen (3) d'étanchéité, le métal du tube ayant également un coefficient de dilatation thermique qui est plus petit que celui de l'enceinte de décharge;
a2) on fait le vide dans l'enceinte (1) de décharge en céramique et on y envoie du matériau de remplissage par l'intermédiaire du tube (4) ouvert;
b) on introduit le système d'électrode, traversée incluse, dans le tube (4) ouvert, les dimensions extérieures de la traversée étant adaptée du tube;
c) on relie directement de manière étanche au vide l'intervalle restant entre la traversée et le tube (4) dans la zone de l'extrémité extérieure du tube (4).

2. Procédé suivant la revendication 1, caractérisé en ce que le tube est en molybdène ou en l'un de ces alliages et en ce que la traversée est en molybdène, en tungstène, en rhénium ou en l'un de leurs alliages.

3. Procédé suivant la revendication 1, caractérisé en ce que le moyen d'étanchéité est un bouchon (3) d'extrémité, qui est en un matériau du genre de la céramique et dont le coefficient de dilatation est proche de celui de l'enceinte de décharge en céramique ou qui est compris entre celui de l'enceinte de décharge et celui de la traversée.

4. Procédé suivant la revendication 1, caractérisé en ce que la fermeture étanche sous vide à l'étape c) s'effectue par une opération de soudage.

5. Lampe (23) à décharge à haute pression comportant une enceinte (1) de décharge en céramique translucide, qui renferme une atmosphère produisant de la lumière, l'enceinte (1) de décharge comportant deux extrémités (2) qui sont fermées par des moyens pour rendre étanche (3), et une traversée (24) conductrice de l'électricité, qui relie une électrode (8,9) située à l'intérieur de l'enceinte de décharge à une ligne (25) d'alimentation électrique extérieure passant de manière étanche au vide par l'un de ces moyens, caractérisée en ce que, à au moins une extrémité (2), la traversée (24) est, dans la zone du moyen (3) d'étanchéité, entourée d'un tube (4) en molybdène ou en l'un de ces alliages, ou en tungstène ou en rhénium, de telle manière que les dimensions extérieures de la traversée sont adaptées au tube (4), le tube (4) étant relié directement de manière étanche au vide à la traversée (24), le tube (4) étant fritté directement de manière étanche au vide dans le moyen d'étanchéité.

6. Lampe ou enceinte de décharge suivant la revendication 5, caractérisée en ce que le moyen pour rendre étanche un bouchon (3) d'extrémité est en un matériau du genre de la céramique dont le coefficient de dilatation est entre celui de l'enceinte de décharge en céramique et celui de la traversée.

7. Lampe ou enceinte de décharge suivant la revendication 6, caractérisée en ce que le bouchon d'extrémité est en un matériau céramique à plusieurs composants qui contient de l'Al₂O₃ comme constituant principal ainsi qu'un ou plusieurs constituants supplémentaires dont le coefficient de dilatation est inférieure à celui de Al₂O₃ , l'enceinte de décharge étant en Al₂O_{3.}

8. Lampe ou enceinte de décharge suivant la revendication 5, caractérisée en ce que la traversée est un tube (11) ou une broche (6;24) ou une pièce (14,15) composée de ces éléments.

9. Lampe ou enceinte de décharge suivant la revendication 5, caractérisée en ce qu'il est montée à l'extrémité de la traversée éloignée de la décharge un auxiliaire (19;24a) de contact pour une ligne (25) électrique d'alimentation extérieure.

10. Lampe ou enceinte de décharge suivant la revendication 5, caractérisée en ce que que le tube (4) a un diamètre extérieur d'environ 1,3 à 2,0 mm et un diamètre intérieur de 0,5 à 1,5 mm.

11. Lampe ou enceinte de décharge suivant la revendication 5, caractérisée en ce que le système (5;10;10';18) d'électrode, qui est au moins constitué d'une traversée et d'une électrode, est, pris en soi, étanche au vide.
